(19) Europäisches Patentamt
European Patent Office
Office européen des brevets

(11) **EP 4 443 213 A1**

(12) **EUROPEAN PATENT APPLICATION**

(43) Date of publication:
**09.10.2024 Bulletin 2024/41**

(21) Application number: **24168424.0**

(22) Date of filing: **04.04.2024**

(51) International Patent Classification (IPC):
**G02B 21/36** (2006.01)

(52) Cooperative Patent Classification (CPC):
**G02B 21/367**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(30) Priority: **06.04.2023 US 202318296859** | (71) Applicant: **Thermo Electron Scientific Instruments LLC**<br>**Madison WI 53711 (US)**<br><br>(72) Inventor: **EICHORST, John**<br>**Fitchburg (US)**<br><br>(74) Representative: **Boult Wade Tennant LLP**<br>**Salisbury Square House**<br>**8 Salisbury Square**<br>**London EC4Y 8AP (GB)** |

(54) **ADAPTIVE SUBTRACTION FOR C-SIM MICROSCOPY**

(57) Computer-implemented image processing methods with a computer processor and computer memory, comprise accessing, from the computer memory, a non-toroidal beam image component comprising a set of pixel intensities across an imaging area and a toroidal beam image component comprising a set of pixel intensities across the imaging area, scaling, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity, and determining a difference between the scaled image intensity of the at least one pixel of the non-toroidal or toroidal image components and an image intensity of at least one pixel of the other of the non-toroidal or toroidal image components to form at least a portion of an image.

**EP 4 443 213 A1**

## Description

### FIELD

The field is high resolution microscopy.

### BACKGROUND

Super-resolution imaging is a set of techniques that can be used to increase the resolution of microscope imaging, beyond the diffraction limit of a standard confocal microscope system. However, issues remain in the quality of the images produced, as various image re-construction settings are often relegated to the user. Arbitrary setting selection can result in inconsistency in the images collected during the course of an experiment or between instruments. This can result in poor quality images, missed feature identifications, or improper inferences relating to the over-emphasis or absence of imaged features. Thus, a need remains for improved super-resolution techniques.

### SUMMARY

According to an aspect of the disclosed technology, computer-implemented image processing methods use a computer processor and computer memory, and include accessing, from the computer memory, a non-toroidal beam image component comprising a set of pixel intensities across an imaging area and a toroidal beam image component comprising a set of pixel intensities across the imaging area, scaling, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity, and determining a difference between the scaled image intensity of the at least one pixel of the non-toroidal or toroidal image components and an image intensity of at least one pixel of the other of the non-toroidal or toroidal image components to form at least a portion of an image. In some method examples, the scaling comprises scaling the at least one pixel of the toroidal beam image component by a ratio of the peak non-toroidal beam imaging pixel intensity across the imaging area to the peak toroidal beam imaging pixel intensity across the imaging area, and wherein the determining a difference comprises subtracting the scaled image intensity of the at least one pixel of the toroidal beam imaging component from the image intensity of the at least pixel of the non-toroidal image component. In some method examples, the scaling comprises scaling the at least one pixel of the non-toroidal beam image component by a ratio of the peak toroidal beam imaging pixel intensity across the imaging area to the peak non-toroidal beam imaging pixel intensity across the imaging area, and the determining a difference comprises subtracting the image intensity of the at least one pixel of the toroidal beam imaging component from the scaled image intensity of the at least pixel of the non-toroidal image component. Some examples further include acquiring the non-toroidal beam image component and the toroidal beam image component by directing a non-toroidal beam to a sample area and detecting non-toroidal beam induced response light from the sample area, wherein the detected non-toroidal beam induced response light corresponds to the non-toroidal beam image component, and directing a toroidal beam to the sample area and detecting toroidal beam induced response light from the sample area, wherein the detected toroidal beam induced response light corresponds to the toroidal image component. In some examples, the non-toroidal beam comprises a Gaussian intensity profile at the sample area and the toroidal beam comprises a toroidal intensity profile at the sample area. In some examples, the directing the toroidal beam to the sample area comprises directing a source beam through a vortex phase plate to produce the toroidal beam. In some examples, the peak non-toroidal imaging pixel intensity comprises a highest intensity below a saturating level of a detector used to obtain the non-toroidal image component. In some examples, the formed image is a super-resolution image. In some examples, the super-resolution image is a Raman scattering image.

According to another aspect of the disclosed technology, apparatus include a computer processor and computer memory, wherein the memory includes code that, when executed by the processor, causes the processor to access, from the computer memory, a non-toroidal beam image component comprising a set of pixel intensities across an imaging area and a toroidal beam image component comprising a set of pixel intensities across the imaging area, scale, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity, and determine a difference between the scaled image intensity of the at least one pixel of the non-toroidal or toroidal image components and an image intensity of at least one pixel of the other of the non-toroidal or toroidal image components to form at least a portion of an image. In some examples, the code that causes the processor to scale an image intensity causes the processor to scale the at least one pixel of the toroidal beam image component by a ratio of the peak non-toroidal beam imaging pixel intensity across the imaging area to the peak toroidal beam imaging pixel intensity across the imaging area, and the code that causes the processor to determine a difference comprises causes the processor to subtract the scaled image intensity of the at least one pixel of the toroidal beam imaging component from the image intensity of the at least pixel of the non-toroidal image component. In some examples, the code that causes the processor to scale an image intensity causes the processor to scale the at least one pixel of the non-toroidal beam image component by a ratio of the peak toroidal beam imaging pixel intensity across the imaging area to the peak non-toroidal beam imaging pixel intensity across the imaging area, and the code that causes the processor to determine a difference causes the processor to subtract the image intensity of the at least one pixel of the toroidal beam imaging component from the scaled image intensity of the at least pixel of the non-toroidal image component. Some examples further include a beam source configured to direct a non-toroidal beam and a toroidal beam to a sample area, and a detector situated to detect non-toroidal beam induced response light and toroidal beam induced response light from the sample area, wherein the detected non-toroidal beam induced response light corresponds to the non-toroidal beam image component and the detected toroidal beam induced response light corresponds to the toroidal image component. In some examples, the non-toroidal beam comprises a Gaussian intensity profile at the sample area and the toroidal beam comprises a toroidal intensity profile at the sample area. In some examples, the beam source comprises a vortex phase plate situated to produce the toroidal beam. In some examples, the beam source comprises an azimuthal polarizer and a spatial light modulator situated to produce the toroidal beam. In some examples, the peak non-toroidal imaging pixel intensity comprises a highest intensity below a saturating level of a detector used to obtain the non-toroidal image component. In some examples, the formed image is a super-resolution light scattering image, phosphorescence image, or a fluorescence image. In representative examples, apparatus a microscope.

According to another aspect of the disclosed technology, computer readable medium comprise computer executable instructions for a computer processor to access, from a computer memory, a non-toroidal beam image component comprising a set of pixel intensities across an imaging area and a toroidal beam image component comprising a set of pixel intensities across the imaging area, scale, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity, and determine a difference between the scaled image intensity of the at least one pixel of the non-toroidal or toroidal image components and an image intensity of at least one pixel of the other of the non-toroidal or toroidal image components to form at least a portion of an image.

The foregoing and other objects, features, and advantages of the disclosed technology will become more apparent from the following detailed description, which proceeds with reference to the accompanying figures.

## BRIEF DESCRIPTION OF THE DRAWINGS

FIGS. 1A-1D are simulated images depicting a subtraction microscopy process.
FIGS. 2A-2D are simulated images showing performance variation with varying an applied gamma factor in a subtraction microscopy process.
FIG. 3A is a set of simulated beads with varying amounts of brightness for a performance comparison.
FIGS. 3B-3C are respectively simulated images of the simulated beads shown in FIG. 3A for two different subtractive processes.
FIGS. 3D-3E are respective graphs showing the performance characteristics of the images in FIGS. 3B-3C produced using the two different subtractive processes.
FIGS. 4A-4B are a microscope image produced in a toroidal mode and confocal mode, respectively.
FIG. 4C is a microscope image of the subtraction of the images in FIGS. 4A-4B according to disclosed techniques.
FIG. 4D is a graph comparing the performance between confocal alone and image subtraction.
FIG. 5 is a schematic of a microscope system configured to produce super-resolution images according to disclosed techniques.
FIG. 6 is a flowchart of an example microscopy method.

## DETAILED DESCRIPTION

*Introduction*

Confocal structured illumination Raman microscopy (C-SIM Raman) is a technique that can be used improve the lateral resolution of Raman microscopes beyond the diffraction limit. Using C-SIM (also referred to as difference microscopy or fluorescence difference microscopy), the lateral resolution of the microscope can be improved by up to around 40% through a subtraction process. An image acquired by scanning a toroidal-shaped focused spot (such as a common confocal microscopy spot) across a sample can be subtracted from an image acquired by scanning with a non-toroidal shaped focused spot. To produce the toroid-shaped focused spot, a vortex phase plate (VPP) can be added along the path of an interrogation beam of the microscope. The VPP creates vortex beams, which when focused, creates a toroidshape containing an inner dark area that can be smaller than the resolution allowed by the objective lens. In other examples, donut-shaped scan spots can be produced by forming azimuthally polarized light with an azimuthal polarizer. In some examples, a spatial light modulator can be used, or used with an azimuthal polarizer, to produce the donut-shaped spot. For example, a beam can be directed through a polarizer to produce both radial and azimuthal polarizations and then the radial component can be removed with the spatial light modulator (spatial filter) to leave the azimuthal polarized light, which is then focused using a lens system to form the donut spot. A spatial light modulator typically has a matrix of elements (e.g., 1000x1000), each of which that can be selectively turned on and off. In some examples, linear polarized light is directed onto an SLM and a specific mask (set of matrix elements programmed as on/off) are inputted. The light can be reflected or transmitted through the SLM. After interacting with the SLM, the light is circularly polarized and then incident on the sample, forming the donut scan spot. In general, toroidal shapes are circular- or donut-shaped, though it will be appreciated that other shapes can be toroidal, such as elliptical, oval, square, etc. When images are subtracted, the diameter of this dark area can define the improved lateral resolution. Thus, in C-SIM microscopy and related difference microscopy techniques, two images are acquired by scanning two different tightly focused scan spots and the images are subtracted from each other in order to improve the lateral resolution of the system.

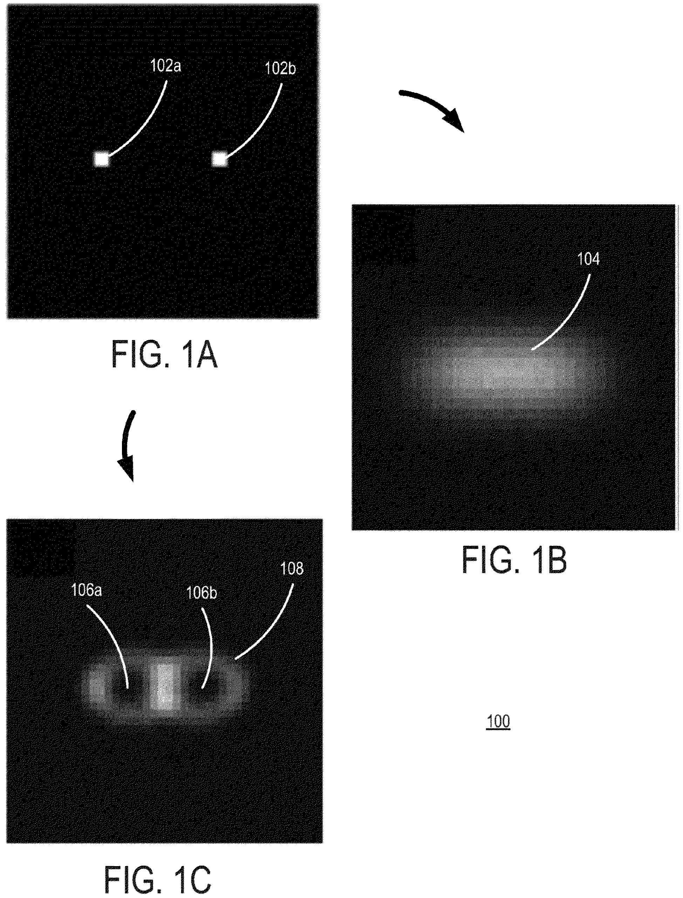

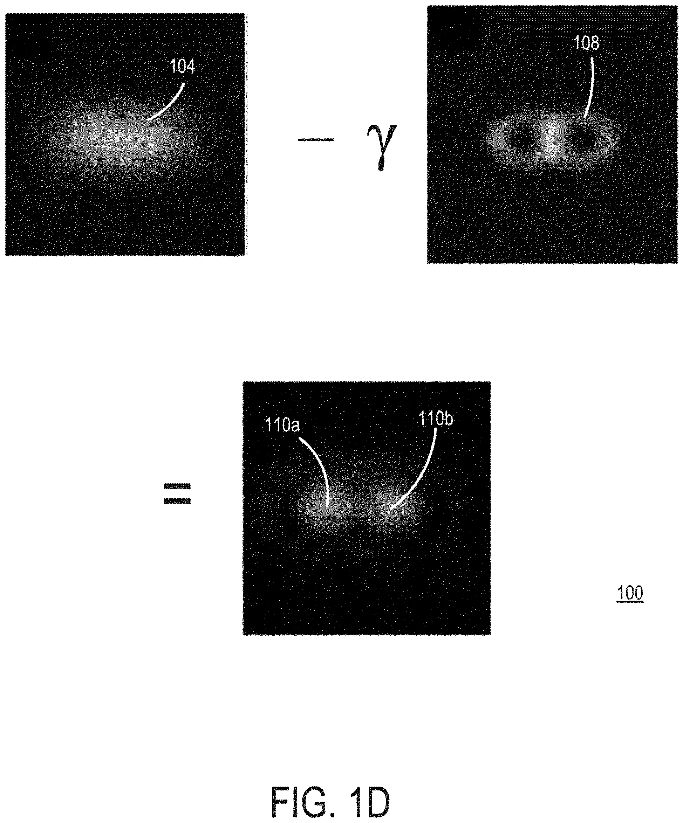

FIGS. 1A-1D illustrate an example C-SIM imaging process 100. FIG. 1A is the ground truth shape of a set of point source objects 102a, 102b arranged to be imaged with a microscope. As shown the objects 102a, 102b are simulated spots of fluoresceindyed nanoscale beads. FIG. 1B is the point spread function (PSF) image of the objects 102a, 102b convolved with a focused Gaussian beam. Because of the diffraction limit, the image appears as a skewed blob 104 omitting the spaced-apart, dual nature of the objects 102a, 102b. The image in FIG. 1B is representative of an image obtained with a typical high-resolution confocal microscope. In the C-SIM imaging process 100, a second image is also obtained in which the objects 102, 102b are convolved with a focused toroidal beam. The diameter of the focused toroidal beam (both light and dark areas) is typically larger than the diameter of the focused Gaussian (or non-toroidal) beam. Holes 106a, 106b become visible to form a somewhat similar skewed blob 108. FIG. 1D shows the pixel intensities of the toroidal image being subtracted from the pixel intensities of the Gaussian image to form a subtracted, or difference, image. In the subtraction image, separated blobs 110a, 110b are seen which have more characteristics in common with the actual objects 102a, 102b, demonstrating the improved lateral resolution available for the microscope used to collect the images. By using the subtraction technique, the improved lateral resolution can distinguish the simulated spots 102a, 102b that would otherwise not be distinguishable.

As shown, the intensities of the toroidal image are weighted by a gamma factor. Thus, with one image acquired using a confocal scan spot ($I_{Confocal}$) and the other image acquired using a toroidal-shaped scan spot ($I_{Donut}$), and with the image acquired with the toroidal-shaped scan spot being typically scaled by a user-defined parameter before being subtracted from the Gaussian image to generate the super-resolution image ($I_{SR}$), the equation for determining the intensities of the super-resolution image can be generally of the form:

$$I_{SR} = I_{Confocal} - (Gamma) * I_{Donut}$$

Unfortunately, in many of the applications of C-SIM, the parameters like gamma involved in this subtraction are decided arbitrarily by the users themselves during experiments. Improper subtraction of images during a C-SIM experiment can result in either image degradation or incomplete utilization of the improved resolution. An adaptive solution that removes both the need for user input and the likelihood of artifacts created by the user deciding on the parameters needed for the subtraction would be a desirable improvement. Previously published adaptive methods that require no user input have not been able to accurately treat objects of variable intensity in images. Variable intensity can be defined as different objects or portions of objects in an image having different intensities, e.g., as with bright and dark beads in an image. Also, these published methods do not take full advantage of the improved resolution offered by C-SIM.

For example, even with the various past attempts, there has yet to be exact or definite criteria introduced to define the scaling parameter for this subtraction. The danger of having an ill-defined scaling factor includes the potential to produce artifacts and degrade features in the image. If an image contains a sparse collection of diffraction-limited objects, such as a collection of small beads, the definition of the scaling parameter can vary without significant artifacts being introduced in the image. However, in most cases, images contain continuous objects such as a cell's nucleus or the cell cytoskeleton, which can be significantly degraded if the incorrect scaling parameter is chosen.

In examples of disclosed technology discussed further hereinbelow, adaptive algorithms can require no user input to perform the image subtraction and can accurately resolve objects with any combination of intensities in images with the full resolution allowed by the C-SIM technique. Methods can be implemented in real-time so that users can obtain images with improved lateral resolution. Disclosed methods can be applied to various microscopes and/or software packages that involve subtractive microscopy. Example techniques can improve the reliability and broaden the usability of existing microscopes, particularly in the super-resolution space. Example methods can present cost-effective solutions for super-resolution microscopy so that these techniques can be employed without any in-depth training or advanced technical skills and so that consistency can be obtained across instruments.

*Example Scaling Techniques*

Disclosed methods can scale an image that is collected with a Gaussian (e.g., normal confocal) scan spot to the same maximum intensity as an image collected with the toroidal scan spot. A maximum intensity can correspond to a maximum radiance, by way of example, and can be associated with one or more pixels. An intensity maximum can be quantified relative to other pixels of an array or matrix of pixels (images). In this way, the images can be scaled so that their maxima of intensity are the same. After the scaling, the two images can be subtracted to form a higher resolution image. The maximum intensity can be defined as the highest intensity below the saturating level of the camera. Using the maximum intensity in the image allows the scaling to be based on the feature in the image with the highest signal/noise ratio. In most or all instances, the toroidal-shaped scan spot produced by the vortex phase plate will be larger in area than the Gaussian scan spot used in the confocal acquisition. Because the density of exciting light in the toroidal-shaped scan spot will be lower in intensity, the image produced by the toroidal-shaped scan spot will be dimmer in intensity than that produced by the Gaussian scan spot. The image produced by the Gaussian scan spot can then have the highest intensity. In many of the disclosed examples, only positive scaling is applied. As a result, the user will avoid obscuring dim objects in their image. Since both images represent the same sets of objects, e.g., across a common imaging area, both images contain this feature and hence, it can be used to define the scaling factor for the subtraction. Python code for a selected implementation of adaptive subtractions is reproduced below in Code Table 1. To achieve the effect, the image collected with a toroidal point-spread function (PSF) is scaled to the same peak intensity as the image collected with Gaussian PSF, the scaled toroidal image is subtracted from the Gaussian image, and at any location in the difference image with intensity < 0, the intensity is sent to 0.

Code Table 1

```
def subtract_method_4(img,imd):
#removing saturating pixels for scaling only
    sat_level=65535
    idx_sat_img=np.where(img==sat_level)
    img_for_scaling=img
    img_for_scaling[idx_sat_img]=0
#doing the scaling
    donut_use=imd*(np.max(img_for_scaling)/np.max(imd))
#doing the subtraction
    test4=img-donut_use
#removing non-zero entries
    idx_f=np.where(test4<0)
    test4[idx_f]=0
#returning C-SIM image

    return test4
```

*Simulated Results of Gamma Variation*

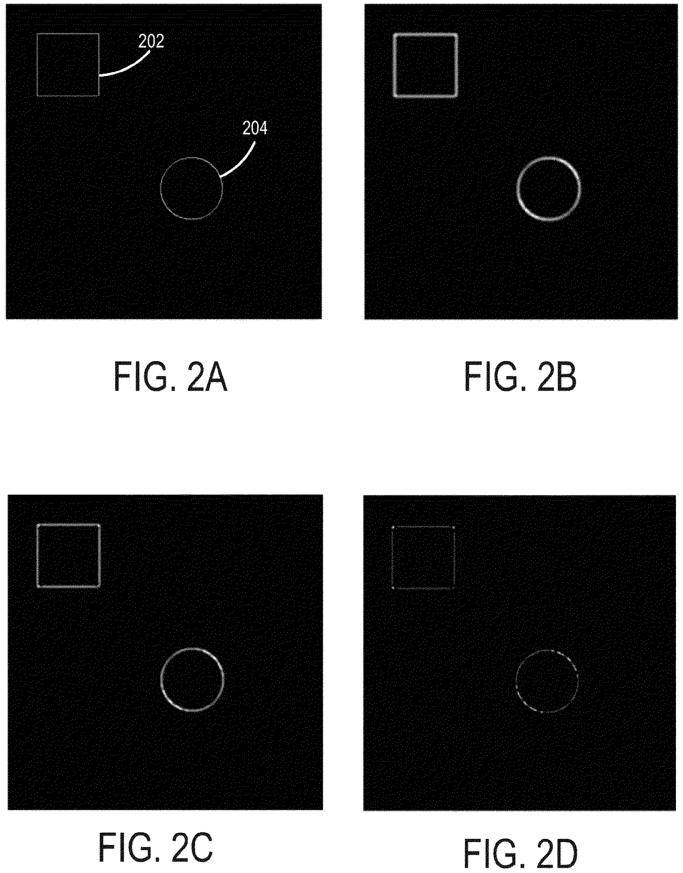

FIGS. 2A-2D is a set of image results for a simulated closed structure, showing how the definition of the scaling factor (Gamma) can affect C-SIM super-resolution images, including generation of artifacts. A simulated square structure 202 and simulated circle structure 204 are shown in FIG. 2A. Each structure 202, 204 included a continuous line having a width of a single pixel. The structures 202, 204 were convolved with a Gaussian, representing a confocal scan spot, and a toroidal donut, representing the scan spot from a vortex plate. The subtraction of the images was undertaken with a varied set of scaling parameters and the resulting images are shown in FIGS. 2B-2D. In general, if the scaling parameter is chosen to be too low, the resulting C-SIM image will not have improvement in lateral resolution. FIG. 2B shows such a lack of improvement for a super-resolution image of the objects 202, 204 from FIG. 2A, where the gamma level was arbitrarily selected to be 0.3. Significant degradation to features in the image can also occur when using large scaling parameters. FIG. 2D shows the resulting super-resolution image for the structures 202, 204 using a gamma value of 1.3. The super-resolution acquired with this higher value for (Gamma) contains definite artifacts around the corners of the square in the form of discontinuities, as well as missing intensities throughout the circle. FIG. 2C shows the resulting subtraction super-resolution image for a gamma of 0.7, showing fewer artifacts.

Currently available methods for determining the scaling parameter include variants of an arbitrary user selection for the gamma value along with adaptive intensity-weighted subtraction methods. Particle Swarm Optimization has also been applied by Kumbham et al. for similar types of image subtraction, but it is limited to certain sample types or would need calibration for any variation in the index of refraction of a sample. As will be discussed, these approaches all have drawbacks when compared to the new adaptive approaches and apparatus described in this application.

*Experimental Performance Comparison*

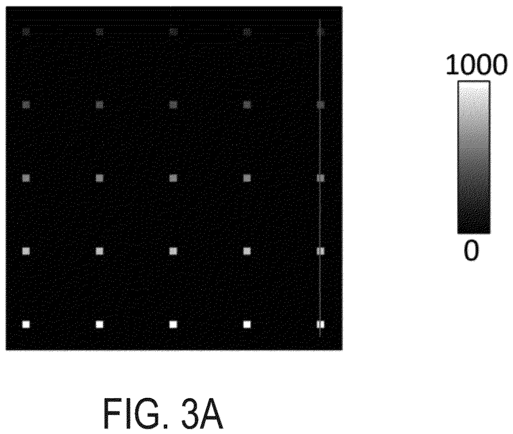

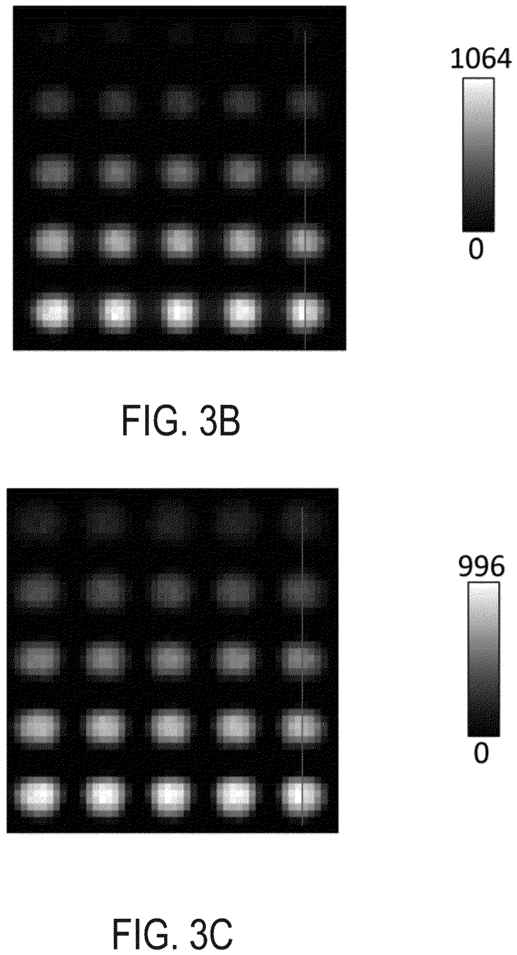

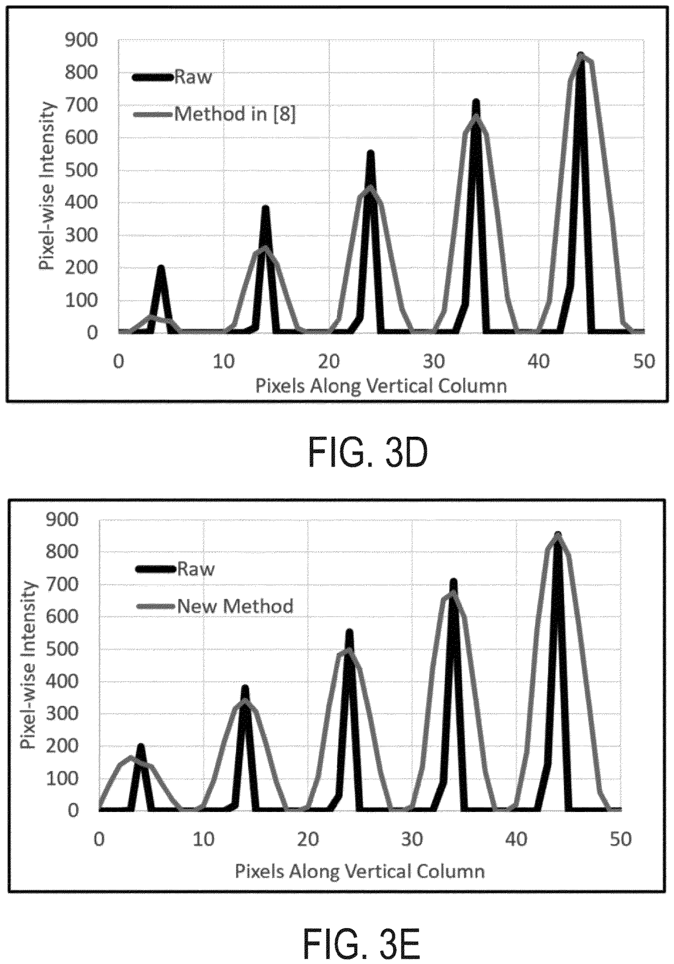

FIGS. 3A-3E show a simulated performance comparison between disclosed techniques and an existing adaptive approach. A grid of beads with incrementally increasing intensities was simulated, as shown in FIG. 3A. The beads presented a grid of single pixel objects. Super-resolution (C-SIM) images were created using the adaptive method described in Kseniya et al., "Intensity Weighted Subtraction Microscopy Approach for Image Contrast and Resolution Enhancement," Scientific Reports volume 6, Article number: 25816 (2016) and the results are shown in FIG. 3B. Separately, FIG. 3C shows the images produced using the steps according to Code Table 1 described above in which intensity is scaled based on peak intensities of toroidal and non-toroidal image components. FIGS. 3D-3E are graphs showing the performance of the Kseniya et al. approach (FIG. 3D) and an approach described herein (FIG. 3E). In each of the graphs, an intensity line profile of the raw simulated single pixel objects in FIG. 3A (line on the right side of the image) was compared to a similar intensity line profile taken in the results shown in FIG. 3B and FIG. 3C. Initially, as shown in FIG. 3D, the relative intensities of the spots in the simulated C-SIM image created by the Kseniya et al. approach do not match the simulated intensities. Also, the super-resolution image produced by the Kseniya et al. approach contains a lot of diffuse fluorescence between the beads, particularly along the bottom row of spots, as seen in FIG. 3B. Although an improvement in the lateral resolution of the imaging system is seen in both sets of approaches when compared to confocal microscopy, the peak intensity scaling approach according to disclosed techniques can access more of the improved resolution from the C-SIM technique, as can be seen from FIG. 3C, as the separation between the objects is more clearly resolved. Likewise, the relative intensity of the spots in the super-resolution image generated according to the steps described herein, matches closely the intensities in the original simulated spots, as can be seen in FIG. 3E. Thus, while the existing adaptive approach of Kseniya et al. struggles when it is presented with features in an image with a range of intensities, techniques disclosed herein show significant improvement.

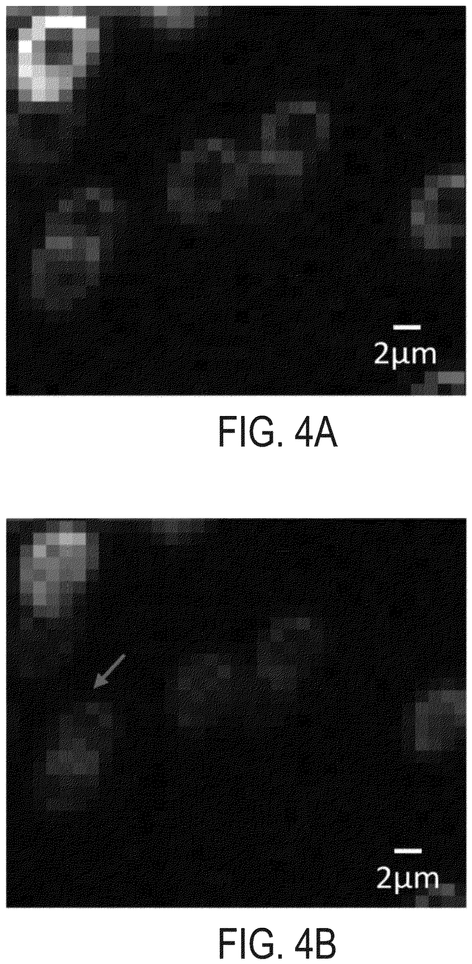

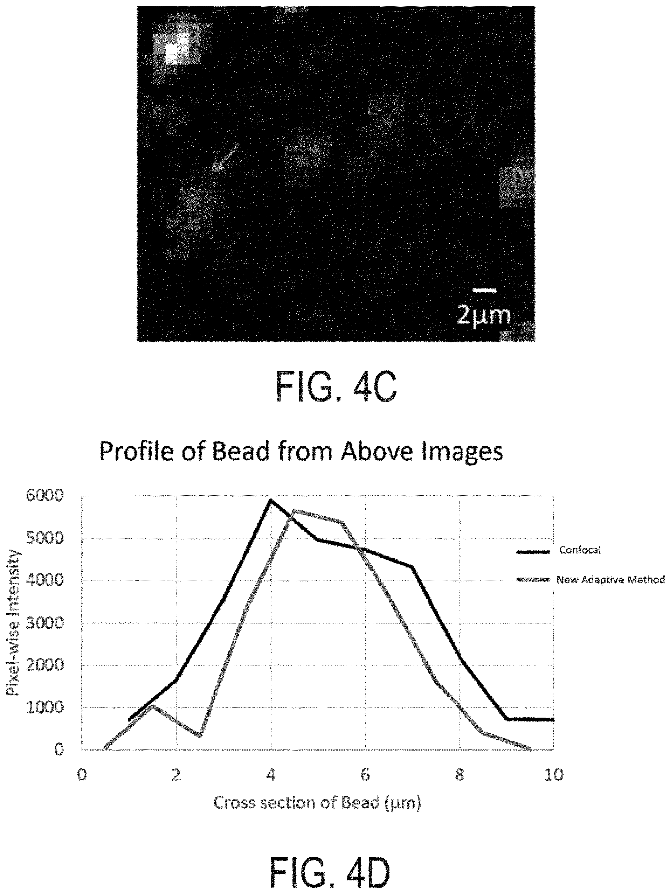

FIGS. 4A-4D show the results of scaling techniques described herein as applied to non-simulated data. In this example, sub-resolution fluorescence beads ($0.5\mu$m in diameter) dried on a cover glass were imaged with a 0.75NA 50x air objective. The images in FIG. 4A were slightly defocused for demonstration purposes. A vortex phase plate was positioned in the beam path to produce a toroidal focus spot for the image shown in FIG. 4A. An image of the same beads from FIG. 4A was acquired with the 50x, 0.75 NA objective, without the vortex phase plate, as shown in FIG. 4B. The image was scaled to 1000 counts for comparison. As shown in FIG. 4C, the image in FIG. 4A was subtracted from the image in FIG. 4B using disclosed adaptive subtraction techniques and the image was again scaled 1000 counts for comparison. FIG. 4D shows line profiles of the bead near the center of the images in FIG. 4A and FIG. 4B. The line profiles shown are for basic confocal acquisition and for C-SIM according to newly disclosed techniques. The arrows in FIGS. 4B & 4C indicate the bead analyzed in FIG 4D. With the use of the improved subtraction techniques, the width (and hence the lateral resolution) of the beads following the subtraction was smaller than in the image acquired with the confocal PSF. In this example, both bright and dim beads present in the image clearly showed an improvement in lateral resolution. Likewise, beads located near one another were also able to be clearly resolved. As described above based on simulated data, disclosed techniques can reliably retain more of the allowed resolution offered by the toroidal scan spot than previous methods.

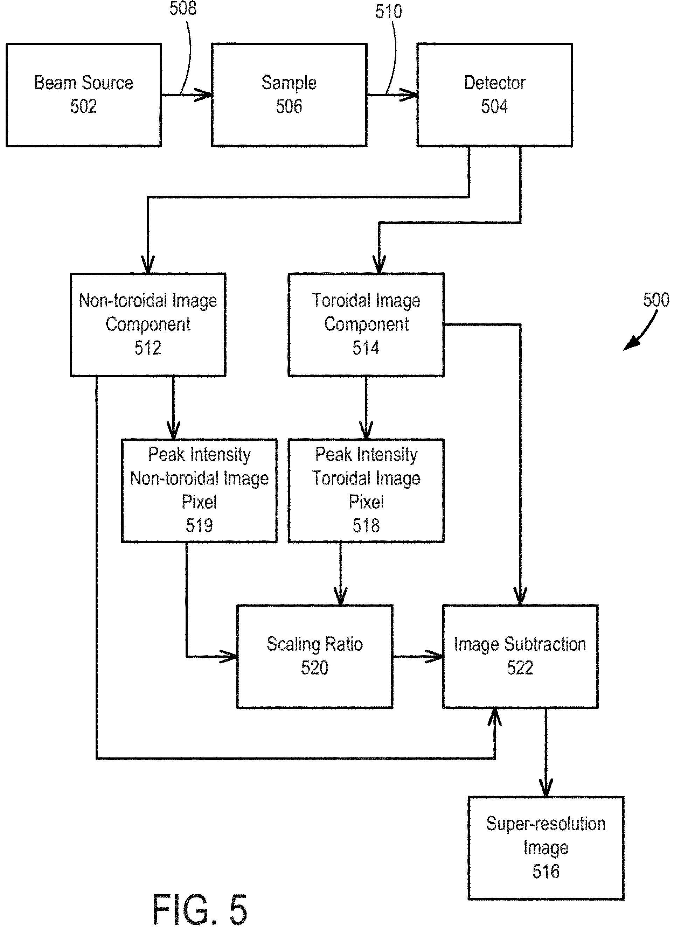

FIG. 5 is an example C-SIM system 500 configured to perform adaptive image subtraction according to disclosed techniques. The system 500 includes a beam source 502 and detector 504. During use, a sample 506 is arranged in relation to a beam 508 generated with the beam source 502. To produce an image across an area, the sample 506 and/or the beam 508 is moved relative to each other so that the beam 508 can be directed to different positions on the sample 506, e.g., through controlled scanning. In representative examples, the beam source 502 is configured to provide the beam 508 in at least two modes. In a first mode, the beam source 502 produces and focuses the beam 508 at the sample 506 such that the beam 508 has a non-toroidal intensity distribution, e.g., as with a normal confocal beam scanning in which a Gaussian distribution may be used. In a second mode, the beam source 502 produces and focuses the beam 508 at the sample 506 such that the beam 508 has a toroidal-shaped intensity distribution. The toroidal-shaped intensity distribution can be directed or scanned across a similar area of the sample 506. In some examples, the beam source 502 produces the toroidal-shaped intensity distribution with the same beam produced to form the Gaussian intensity distribution but with a vortex phase plate situated in the beam path. In further examples, the beam source 502 uses an azimuthal polarizer and/or a spatial light modulator situated in the beam path to produce the toroidal-shaped intensity distribution. In some examples, the microscope 500 can be configured for 3D imaging and scanning, operating in similar modes and beam intensity distributions suitable for C-SIM subtraction microscopy in a 3D context, e.g., with toroidal distributions extending in a z-direction to form 3D toroidal distributions having a tube shape. In such examples, voxels can replace pixels and volumes can replace areas. Because a toroidal shape of a scan spot typically exists at or very near the focus of the objective, scanning techniques that vary a focus position along a z-axis can be used.

The detector 504 is arranged to receive response light 510 from the sample 506. The response light 510 can be of various forms, such as light scattering (Raman, Rayleigh, Mie, etc.), phosphorescence, fluorescence, etc., and can be described by point-spread functions (PSFs) as a convolution of the intensity profile of the beam 508 with the structure of the sample 506. In the first mode, an image component 512 produced with beam 508 having a Gaussian or other non-toroidal shape at a focus can be detected and stored in a computer memory. In the second mode, an image component 514 produced with the beam 508 having a toroidal shape at a focus can also be detected and stored in the computer memory. The image components 512, 514 can include mappings of intensities across common locations of the sample 506. The system 500 can further include or be coupled to (e.g., locally, remotely, wired, wirelessly, etc.) a processor configured with processor-executable instructions to analyze and process the image components 512, 514 to form a super-resolution image 516. In any instrument, there can be some x-y drift, particularly where different sets of images are acquired at different times (e.g., a confocal image first and a donut image second). An image registration analysis can be performed so that the images can be aligned and before an image subtraction occurs. In representative examples, a peak intensity toroidal image pixel 518 can be identified from the image component 514 as the pixel having a largest intensity in the set of pixels forming the image component 514. Also, a peak intensity non-toroidal image pixel 519 can be identified from the image component 512 as the pixel having a largest intensity in the set of pixels forming the image component 512. A scaling ratio 520, or gamma factor, can be defined by the ratio of the intensity of the peak toroidal image pixel to the intensity of the peak non-toroidal image pixel. An image subtraction routine 522 can proceed to produce the super-resolution image 516. For example, intensities of the toroidal image component 514 can be scaled according to the scaling ratio 520 and then the scaled intensities can be subtracted from the intensities of the non-toroidal image component 512. Alternatively, the intensities of the non-toroidal image component 514 can be scaled according to the scaling ratio 520 in reciprocal form, and then the intensities of the toroidal image component 514 can be subtracted from the scaled intensities of the non-toroidal component 512. By scaling based on the scaling ratio 520, an improvement can be obtained in the feature definition in the super-resolution image 516. Further, several additional advantages can be provided, including that the user no longer is required to select the scaling ratio 520 arbitrarily or heuristically or have the scaling ratio 520 be set to a sub-optimal default value. Rather, in many instances, the adaptively defined scaling ratio 520 can accurately resolve objects with any combination of intensities in images with the full resolution allowed by the C-SIM technique. Approaches can be implemented in real-time so that users can obtain images with improved lateral resolution. In many examples, no calibration, control measurements, or a priori knowledge about the instrument need be implemented for the adaptive scaling to operate and produce high-resolution images.

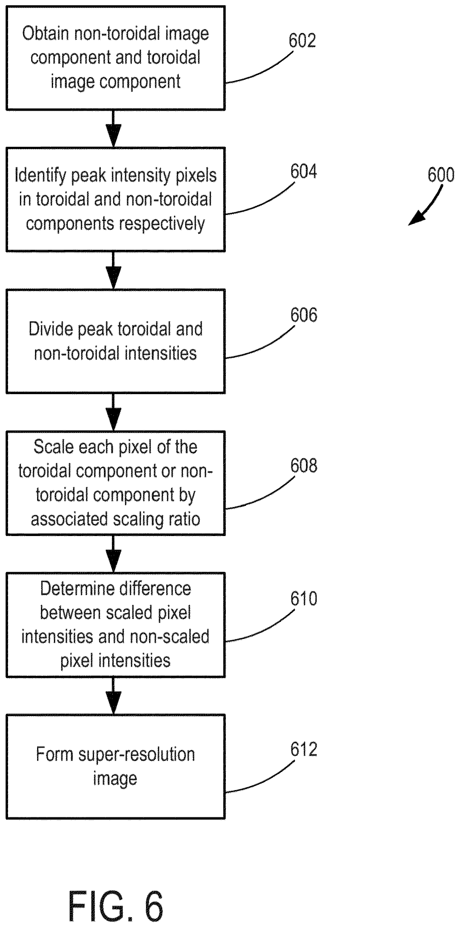

FIG. 6 shows various example methods 600 of microscopy, e.g., that can be used to produce an enhanced image, such as an enhanced super-resolution image. At 602, a non-toroidal (e.g., Gaussian) image component and toroidal image component can be obtained. Image components can be obtained in various ways. In some examples, the image components can be obtained by collecting microscope images with an imaging sensor of a microscope system, sending collected image data associated with the collected microscope images to a computing system, and receiving the image data with a processor configured to form enhanced images. In some instances, obtaining an image component can involve receiving or accessing the stored image data without collecting the image with the microscope system. For example, image data can be processed at some later time after image acquisition, such as after an experiment or image batch is completed, or with a different remote or cloud computing unit.

At 604, the processor or processors tasked with forming enhanced images can identify a peak intensity pixel in the toroidal image component and a peak intensity pixel in the non-toroidal image component. At 606, the peak intensity at the pixel of the non-toroidal image component can be divided by the peak intensity at the pixel of the toroidal image component, or the peak intensity at the pixel of the toroidal image component can be divided by the peak intensity at the pixel of the non-toroidal image component. The selection can depend on which of the toroidal and non-toroidal image components is brighter. In most cases, the brighter image will be the non-toroidal (e.g., normal confocal) image component. However, there could be cases of photobleaching or mis-alignment of the instrument that could cause this not to be the case. In general, it can be desirable to ensure that a scaling factor > 1 is being applied to an image, so that features in the image being scaled are not diminished or eliminated.

In many instances, the peak intensity pixel of the toroidal or non-toroidal image component and a pixel of the other of the non-toroidal or toroidal image component can correspond to the same ground truth position of the target being imaged. In further examples, ground truth positions of the non-toroidal and toroidal components can have different pixel positions due to drift or relative movement between the imaged object, sensor, or probe beam, between image component collection times. Image components can be compared so that pixel locations can be mapped between image components, e.g., by using one or more image registration techniques to align images to each other. In some instances, more than one pixel of the toroidal component can have the same peak intensity value or more than one pixel of the non-toroidal component can have the same peak intensity value, and any of such pixels can be selected as defining the peak intensity for image enhancement purposes.

At 608, the quotient determined at 606 can correspond to a scaling ratio, or gamma, which can then be used to scale each pixel intensity value of the toroidal or non-toroidal image components. In many instances, the scaling can be applied by multiplying each pixel intensity by the scaling factor in one of the toroidal or non-toroidal image components. At 610, a difference can be determined between scaled pixels of a component and non-scaled pixels of the other component. For example, with each of the toroidal component pixels scaled by a ratio of the peak non-toroidal image component pixel intensity to the peak toroidal image component pixel intensity, the scaled toroidal component pixel intensities can be subtracted from the non-toroidal component pixel intensities. Alternatively, with each of the non-toroidal component pixels scaled by a ratio of the peak toroidal image component pixel intensity to the peak non-toroidal image component pixel intensity, the toroidal component pixel intensities can be subtracted from the scaled non-toroidal component pixel intensities. At 612, a super-resolution image can be formed, e.g., from the arrangement of pixel intensities obtained at 610.

*General Considerations*

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

The systems, apparatus, and methods described herein should not be construed as limiting in any way. Instead, the present disclosure is directed toward all novel and non-obvious features and aspects of the various disclosed embodiments, alone and in various combinations and sub-combinations with one another. The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus. Additionally, the description sometimes uses terms like "produce" and "provide" to describe the disclosed methods. These terms are highlevel abstractions of the actual operations that are performed. The actual operations that correspond to these terms will vary depending on the particular implementation and are readily discernible by one of ordinary skill in the art.

In some examples, values, procedures, or apparatus are referred to as "lowest", "best", "minimum," or the like. It will be appreciated that such descriptions are intended to indicate that a selection among many used functional alternatives can be made, and such selections need not be better, smaller, or otherwise preferable to other selections.

The disclosed algorithmic techniques may be, for example, embodied as software or firmware instructions carried out by a digital computer. For instance, any of the disclosed adaptive imaging techniques can be performed by a computer or other computing hardware (e.g., an ASIC or FPGA) that is part of an image processing and/or microscope system. The system can be connected to or otherwise in communication with an imaging processor and be programmed or configured to receive imaging data from the detector (e.g., CCD, CMOS, etc.) and perform the desired subtraction computations (e.g., any of the adaptive subtraction techniques disclosed herein). The computer can be a computer system comprising one or more processors (processing devices) and tangible, non-transitory computer-readable media (e.g., one or more optical media discs, volatile memory devices (such as DRAM or SRAM), or nonvolatile memory or storage devices (such as hard drives, NVRAM, and solid state drives (e.g., Flash drives)). The one or more processors can execute computer-executable instructions stored on one or more of the tangible, non-transitory computer-readable media, and thereby perform any of the disclosed techniques. For instance, software for performing any of the disclosed embodiments can be stored on the one or more volatile, non-transitory computer-readable media as computer-executable instructions, which when executed by the one or more processors, cause the one or more processors to perform any of the disclosed adaptive subtraction techniques. The results of the computations can be stored (e.g., in a suitable data structure or lookup table) in the one or more tangible, non-transitory computer-readable storage media and/or can also be output to the user, for example, by displaying, on a display device, super-resolution images with a graphical user interface.

In view of the many possible embodiments to which the principles of the disclosed technology may be applied, it should be recognized that the illustrated embodiments are only representative examples and should not be taken as limiting the scope of the disclosure. Alternatives specifically addressed in these sections are merely exemplary and do not constitute all possible alternatives to the embodiments described herein. For instance, various components of systems described herein may be combined in function and use. We therefore claim all that comes within the scope of the appended claims.

**Claims**

1. A computer-implemented image processing method with a computer processor and computer memory, comprising:

   accessing, from the computer memory, a non-toroidal beam image component comprising a set of pixel intensities across an imaging area and a toroidal beam image component comprising a set of pixel intensities across the imaging area;
   scaling, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity; and
   determining a difference between the scaled image intensity of the at least one pixel of the non-toroidal or toroidal image components and an image intensity of at least one pixel of the other of the non-toroidal or toroidal image components to form at least a portion of an image.

2. The method of claim 1, wherein the scaling comprises scaling the at least one pixel of the toroidal beam image component by a ratio of the peak non-toroidal beam imaging pixel intensity across the imaging area to the peak toroidal beam imaging pixel intensity across the imaging area, and wherein the determining a difference comprises subtracting the scaled image intensity of the at least one pixel of the toroidal beam imaging component from the image intensity of the at least pixel of the non-toroidal image component.

3. The method of claim 1, wherein the scaling comprises scaling the at least one pixel of the non-toroidal beam image component by a ratio of the peak toroidal beam imaging pixel intensity across the imaging area to the peak non-toroidal beam imaging pixel intensity across the imaging area, and wherein the determining a difference comprises subtracting the image intensity of the at least one pixel of the toroidal beam imaging component from the scaled image intensity of the at least pixel of the non-toroidal image component.

4. The method of claim 1, further comprising acquiring the non-toroidal beam image component and the toroidal beam image component by:

   directing a non-toroidal beam to a sample area and detecting non-toroidal beam induced response light from the sample area, wherein the detected non-toroidal beam induced response light corresponds to the non-toroidal beam image component; and
   directing a toroidal beam to the sample area and detecting toroidal beam induced response light from the sample area, wherein the detected toroidal beam induced response light corresponds to the toroidal image component.

5. The method of claim 4, wherein the non-toroidal beam comprises a Gaussian intensity profile at the sample area and the toroidal beam comprises a toroidal intensity profile at the sample area.

6. The method of claim 4, wherein the directing the toroidal beam to the sample area comprises directing a source beam through a vortex phase plate to produce the toroidal beam.

7. The method of claim 1, wherein the peak non-toroidal imaging pixel intensity comprises a highest intensity below a saturating level of a detector used to obtain the non-toroidal image component.

8. The method of claim 1, wherein the formed image is a super-resolution image such as a Raman scattering image.

9. An apparatus, comprising:
a computer processor and computer memory, wherein the memory includes code that, when executed by the processor, causes the processor to:

access, from the computer memory, a non-toroidal beam image component comprising a set of pixel intensities across an imaging area and a toroidal beam image component comprising a set of pixel intensities across the imaging area;
scale, with the computer processor, an image intensity of at least one pixel of one of the non-toroidal or toroidal beam image components by a ratio between a peak non-toroidal beam imaging pixel intensity across the imaging area and a peak toroidal beam imaging intensity across the imaging area to produce a scaled image intensity; and
determine a difference between the scaled image intensity of the at least one pixel of the non-toroidal or toroidal image components and an image intensity of at least one pixel of the other of the non-toroidal or toroidal image components to form at least a portion of an image.

10. The apparatus of claim 9, wherein the code that causes the processor to scale an image intensity comprises causing the processor to scale the at least one pixel of the toroidal beam image component by a ratio of the peak non-toroidal beam imaging pixel intensity across the imaging area to the peak toroidal beam imaging pixel intensity across the imaging area, and wherein the code that causes the processor to determine a difference comprises causing the processor to subtract the scaled image intensity of the at least one pixel of the toroidal beam imaging component from the image intensity of the at least pixel of the non-toroidal image component.

11. The apparatus of claim 9, wherein the code that causes the processor to scale an image intensity comprises causing the processor to scale the at least one pixel of the non-toroidal beam image component by a ratio of the peak toroidal beam imaging pixel intensity across the imaging area to the peak non-toroidal beam imaging pixel intensity across the imaging area, and wherein the code that causes the processor to determine a difference comprises causing the processor to subtract the image intensity of the at least one pixel of the toroidal beam imaging component from the scaled image intensity of the at least pixel of the non-toroidal image component.

12. The apparatus of claim 9, further comprising:

a beam source configured to direct a non-toroidal beam and a toroidal beam to a sample area; and
a detector situated to detect non-toroidal beam induced response light and toroidal beam induced response light from the sample area, wherein the detected non-toroidal beam induced response light corresponds to the non-toroidal beam image component and the detected toroidal beam induced response light corresponds to the toroidal image component.

13. The apparatus of claim 12, wherein the non-toroidal beam comprises a Gaussian intensity profile at the sample area and the toroidal beam comprises a toroidal intensity profile at the sample area.

14. The apparatus of claim 12, wherein the beam source comprises a vortex phase plate situated to produce the toroidal beam, and, optionally, an azimuthal polarizer and a spatial light modulator situated to produce the toroidal beam.

15. The apparatus of claim 9, wherein the peak non-toroidal imaging pixel intensity comprises a highest intensity below a saturating level of a detector used to obtain the non-toroidal image component.

16. The apparatus of claim 9, wherein the formed image is a super-resolution light scattering image, phosphorescence image, or a fluorescence image.

17. A microscope, comprising the apparatus of any one of claims 9 to 16.

18. A computer readable medium, comprising computer executable instructions for a computer processor to carry out the method steps of any one of claims 1-8.

FIG. 1A

FIG. 1B

FIG. 1C

100

FIG. 1D

FIG. 2A

FIG. 2B

FIG. 2C

FIG. 2D

FIG. 3A

FIG. 3B

FIG. 3C

FIG. 3D

FIG. 3E

FIG. 4A

FIG. 4B

FIG. 4C

Profile of Bead from Above Images

FIG. 4D

508                         510

```
┌─────────────┐      ┌─────────────┐      ┌─────────────┐
│ Beam Source │─────▶│   Sample    │─────▶│  Detector   │
│     502     │      │     506     │      │     504     │
└─────────────┘      └─────────────┘      └─────────────┘
```

500

```
┌──────────────────┐          ┌──────────────────┐
│ Non-toroidal Image│         │  Toroidal Image  │
│    Component     │          │    Component     │
│       512        │          │       514        │
└──────────────────┘          └──────────────────┘

┌──────────────────┐          ┌──────────────────┐
│  Peak Intensity  │          │  Peak Intensity  │
│Non-toroidal Image│          │ Toroidal Image   │
│      Pixel       │          │      Pixel       │
│       519        │          │       518        │
└──────────────────┘          └──────────────────┘

          ┌──────────────┐    ┌──────────────────┐
          │Scaling Ratio │───▶│ Image Subtraction│
          │     520      │    │       522        │
          └──────────────┘    └──────────────────┘

                              ┌──────────────────┐
                              │ Super-resolution │
                              │      Image       │
                              │       516        │
                              └──────────────────┘
```

FIG. 5

Obtain non-toroidal image
component and toroidal
image component
602

↓

Identify peak intensity pixels
in toroidal and non-toroidal
components respectively
604

600

↓

Divide peak toroidal and
non-toroidal intensities
606

↓

Scale each pixel of the
toroidal component or non-
toroidal component by
associated scaling ratio
608

↓

Determine difference
between scaled pixel
intensities and non-scaled
pixel intensities
610

↓

Form super-resolution
image
612

# FIG. 6

Europäisches
Patentamt
European
Patent Office
Office européen
des brevets

# EUROPEAN SEARCH REPORT

**Application Number**

EP 24 16 8424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KSENIYA KOROBCHEVSKAYA ET AL: "Intensity Weighted Subtraction Microscopy Approach for Image Contrast and Resolution Enhancement", SCIENTIFIC REPORTS, vol. 6, no. 1, 1 May 2016 (2016-05-01), XP055747167, DOI: 10.1038/srep25816 * abstract; page 1 - page 2; figure 1 * | 1-18 | INV. G02B21/36 |
| X | US 2015/053871 A1 (GRUNDFEST WARREN S [US] ET AL) 26 February 2015 (2015-02-26) * paragraphs [0035] - [0037], [0041], [0042], [0062]; figure 8 * | 9-11,15, 17,18 | |

**TECHNICAL FIELDS SEARCHED (IPC)**

G02B

The present search report has been drawn up for all claims

| Place of search | Date of completion of the search | Examiner |
|---|---|---|
| Munich | 19 August 2024 | Biedermann, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8424

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | Publication date | Patent family member(s) | Publication date |
|---|---|---|---|
| US 2015053871 A1 | 26-02-2015 | AU 2013225655 A1 | 18-09-2014 |
| | | CA 2865948 A1 | 06-09-2013 |
| | | EP 2820398 A1 | 07-01-2015 |
| | | JP 6389763 B2 | 12-09-2018 |
| | | JP 2015508905 A | 23-03-2015 |
| | | US 2015053871 A1 | 26-02-2015 |
| | | WO 2013131062 A1 | 06-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KSENIYA et al.** Intensity Weighted Subtraction Microscopy Approach for Image Contrast and Resolution Enhancement. *Scientific Reports,* 2016, vol. 6